# EUROPEAN PATENT APPLICATION

(11) **EP 4 014 771 A1**
(43) Date of publication of application: **22.06.2022**
(21) Application number: 19947276.2
(22) Date of filing: 25.09.2019
(51) Int. Cl.: A24F 47/00

(54) **BATTERY UNIT, AEROSOL GENERATION DEVICE, INFORMATION PROCESSING METHOD, AND PROGRAM**

(71) Applicant: Japan Tobacco Inc., Tokyo 105-6927 (JP)
(72) Inventor: ONO, Yasuhiro, Tokyo 130-8603 (JP)
(74) Representative: Hoffmann Eitle
(86) International application number: PCT/JP2019/037530
(87) International publication number: WO 2021/059384

(57) **Abstract**

This battery unit is for an aerosol generation device for generating an aerosol and is provided with: a communication unit for performing an authentication connection which is setting processing for a communication connection between the aerosol generation device and a user terminal; and a control unit for detecting a predetermined action of the aerosol generation device. When the predetermined action is detected after the authentication connection is restricted, the control unit performs the authentication connection. Thereby, the burden of a user having to re-perform the authentication connection can be reduced.

## Description

### Technical Field

The present invention relates to a battery unit, an aerosol generation device, an information processing method, and a program.

### Background Art

Patent Literature 1 discloses a technique for an electronic cigarette to communicate with an external device via short-range wireless communication such as Bluetooth [registered trademark].

### Citation List

### Patent Literature

Patent Literature 1: JP2018-533923A

### Summary of Invention

### Technical Problem

When starting short-range wireless communication such as Bluetooth communication with an external device, a conventional electronic cigarette as described in Patent Literature 1 needs to execute a pairing process that is a process of configuring a communication connection between the electronic cigarette and the external device.

However, in Patent Literature 1, the pairing process between the electronic cigarette and the external device is not always successful. If the pairing process fails, the user usually needs to re-execute (retry) the pairing process by manually operating the electronic cigarette or the external device.

As described above, if an authentication connection, which is a process of configuring a communication connection between an aerosol generation device and a user terminal, fails, for example, the authentication connection needs to be manually re-executed (retried) by the user, which is time-consuming to the user. That is, re-executing (retrying) the authentication connection may impose a large load on the user.

Accordingly, some aspects of the present invention have been made in view of the foregoing situation, and an object thereof is to provide a technique that can reduce the load on a user when executing an authentication connection.

### Solution to Problem

A battery unit according to an aspect of the present invention is a battery unit for an aerosol generation device for generating an aerosol, including a communication unit configured to execute an authentication connection that is a process of configuring a communication connection between the aerosol generation device and a user terminal; and a control unit configured to sense a predetermined action on the aerosol generation device, wherein the control unit is configured to execute the authentication connection in response to sensing of the predetermined action after the authentication connection is restricted.

An aerosol generation device according to an aspect of the present invention is an aerosol generation device for generating an aerosol, including a communication unit configured to execute an authentication connection that is a process of configuring a communication connection between the aerosol generation device and a user terminal; and a control unit configured to sense a predetermined action on the aerosol generation device, wherein the control unit is configured to execute the authentication connection in response to sensing of the predetermined action after the authentication connection is restricted.

An information processing method according to an aspect of the present invention is an information processing method executed by an aerosol generation device for generating an aerosol, including a step of executing an authentication connection that is a process of configuring a communication connection between the aerosol generation device and a user terminal; a step of sensing a predetermined action on the aerosol generation device; and a step of executing the authentication connection in response to sensing of the predetermined action after the authentication connection is restricted.

A program according to an aspect of the present invention is a program for causing a computer to implement a communication function of executing an authentication connection that is a process of configuring a communication connection between an aerosol generation device and a user terminal; and a control function of sensing a predetermined action on the aerosol generation device, wherein the control function executes the authentication connection in response to sensing of the predetermined action after the authentication connection is restricted.

According to these aspects, after the authentication connection is restricted, the authentication connection is executed when a predetermined action is sensed. Therefore, it is possible to reduce the load on a user when executing an authentication connection.

In the present invention, the terms "unit" or "part" and "device" do not simply refer to physical means and may include functions of the "unit" or "part" and "device", which are implemented by software. In addition, the functions of one "unit" or "part" or one "device" may be implemented by two or more physical means or devices, or the functions of two or more "units" or "parts" or two or more "devices" may be implemented by one physical means or device.

### Advantageous Effects of Invention

According to the present invention, it is possible to reduce the load on a user when re-executing an authentication connection.

### Brief Description of Drawings

[FIG. 1] FIG. 1 is a schematic configuration diagram of an information processing system according to an embodiment of the present invention.
[FIG. 2A] FIG. 2A is a block diagram of a schematic configuration of a flavor inhaler according to the embodiment of the present invention.
[FIG. 2B] FIG. 2B is a diagram illustrating an example schematic appearance of the flavor inhaler according to the embodiment of the present invention.
[FIG. 3] FIG. 3 is a block diagram illustrating a schematic configuration of the flavor inhaler according to the embodiment of the present invention.
[FIG. 4] FIG. 4 is a block diagram illustrating another schematic configuration of the flavor inhaler according to the embodiment of the present invention.
[FIG. 5] FIG. 5 is a diagram illustrating another example schematic appearance of the flavor inhaler according to the embodiment of the present invention.
[FIG. 6] FIG. 6 illustrates another example schematic appearance of the flavor inhaler according to the embodiment of the present invention with an aerosol generating substrate held.
[FIG. 7] FIG. 7 is a block diagram of a schematic configuration of a user terminal according to the embodiment of the present invention.
[FIG. 8] FIG. 8 is a schematic configuration diagram illustrating an example functional configuration of a control unit according to the embodiment of the present invention.
[FIG. 9] FIG. 9 is a flowchart illustrating an example of an authentication connection according to the embodiment of the present invention.
[FIG. 10] FIG. 10 is a diagram illustrating an example hardware configuration of a computer according to an embodiment of the present invention.

### Description of Embodiments

Embodiments of the present invention will be described hereinafter with reference to the accompanying drawings. The following embodiments are illustrative for describing the present invention and are not intended to limit the present invention to only the embodiments thereof. Further, the present invention may be modified in various ways without departing from the gist thereof. In addition, in the drawings, the same structural elements are denoted by the same reference signs as much as possible, and redundant description will be omitted.

### [Configuration of Information Processing System]

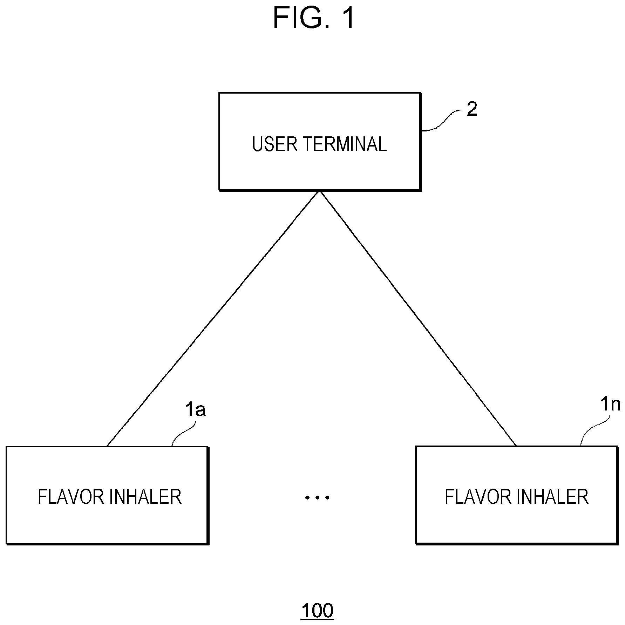

FIG. 1 is a schematic configuration diagram (system configuration diagram) of an information processing system according to this embodiment of the present invention. As illustrated in FIG. 1, an information processing system 100 is configured to include, for illustrative purposes, n flavor inhalers 1 (n is any integer value greater than or equal to 1), and a user terminal 2 configured to be capable of communicating with the n flavor inhalers 1.

The "flavor inhaler 1" is a tool used to inhale flavor and is intended to be, for example, but not limited to, an electronic cigarette, a heat-not-burn tobacco product, or a conventional tobacco product. The flavor inhaler 1 may be an aerosol generation device that generates an aerosol and that is used to inhale the generated aerosol. The action of inhaling an aerosol is referred to as "puff action", and the number of times a puff action is performed is referred to as the "number of puffs". The aerosol generation device is intended to be, for example, an electronic cigarette, a heat-not-burn tobacco product, or a nebulizer for medical use. More specifically, the aerosol generation device is, for example, a device that atomizes a liquid (aerosol source) using electric power to generate an aerosol. The aerosol is obtained by atomizing an aerosol source and is a suspension of fine particles in a gas. The aerosol produced by the aerosol generation device may include a flavor. Examples of the aerosol generation device include a heat-not-burn tobacco product and an electronic cigarette. The aerosol generation device further includes a type that directly heats tobacco (direct heating), a type that indirectly heats tobacco (indirect heating), and a type that heats a liquid. Alternatively, the aerosol generation device may produce SAWs (Surface Acoustic Waves) using a piezoelectric element substrate having a pair of comb electrodes to atomize a liquid. In the figure, a flavor inhaler 1a and a flavor inhaler In are illustrated as n flavor inhalers. In the following description, these n flavor inhalers are simply referred to as "flavor inhalers 1" with some reference signs omitted, when they are described without being distinguished from each other.

The user terminal 2 is implemented by, for example, a smartphone, a game console, or a personal computer. One user terminal 2 is illustrated in the figure, but it is not limited thereto. The information processing system 100 may include a plurality of user terminals 2.

The flavor inhaler 1 and the user terminal 2 are associated with each other and are capable of executing short-range wireless communication such as Bluetooth or BLE (Bluetooth Low Energy) communication to transmit and receive information to and from each other. Transmission and reception of information between the flavor inhaler 1 and the user terminal 2 is not limited to BLE communication and may be executed by any communication such as Wi-Fi [registered trademark], LPWAN (Low Power Wide Area Network), or NFC (Near Field Communication). In addition, transmission and reception of information between the flavor inhaler 1 and the user terminal 2 is not limited to wireless communication and may be wired communication such as USB (Universal Serial Bus), Mini USB, Micro USB, or Lightning.

The flavor inhaler 1 and the user terminal 2 included in the information processing system 100 will be described in detail hereinafter.

### [Configuration of Flavor Inhaler]

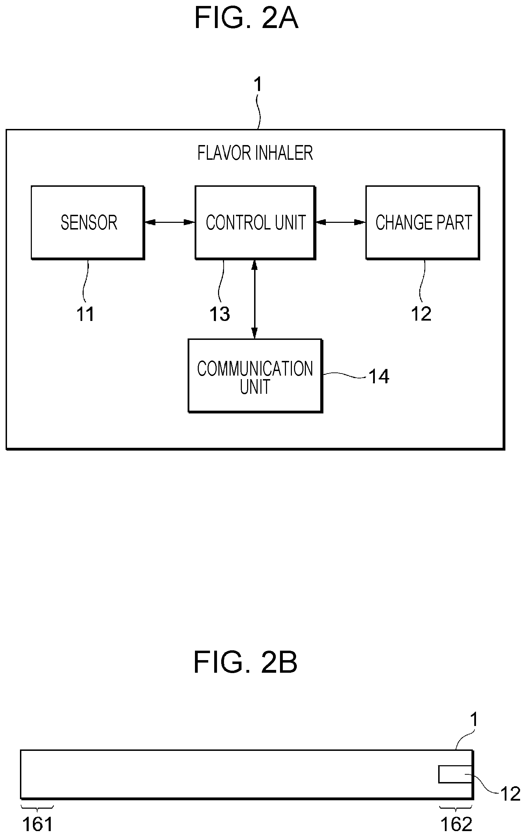

FIG. 2A is a block diagram of a schematic configuration of the flavor inhaler according to the embodiment of the present invention. It should be noted that FIG. 2A schematically and conceptually illustrates components included in the flavor inhaler 1 and does not illustrate the precise arrangement, shape, size, positional relationship, and the like of the components and the flavor inhaler 1. It should also be noted that the flavor inhaler 1 may include a component not illustrated in FIG. 2A, such as a tobacco capsule or a liquid cartridge.

A sensor 11 represents a sensor that detects information regarding, for example, inhalation of a user. The sensor 11 may be any type of sensor for detecting a puff action (an inhalation action) of the user, such as a flow sensor, a flow velocity sensor, or a pressure sensor. The sensor 11 may be a button to be pressed by the user to perform a puff action. For example, the sensor 11 may be an inhalation sensor and may detect an inhalation of the user through the flavor inhaler 1. The sensor 11 may be an air flow sensor and may detect an air flow generated by inhalation of the user. The sensor 11 may be a GPS sensor that measures the position of the flavor inhaler 1. The sensor 11 may be a motion sensor that detects a movement of the flavor inhaler 1. The motion sensor may be, for example, a gyro sensor or the like for detecting an angle, a posture, or the like of the flavor inhaler 1, or may be an acceleration sensor for detecting a movement of the flavor inhaler 1 in each axial direction. The motion sensor may be a combination of a gyro sensor, an acceleration sensor, and the like.

A change part 12 is a block that generates a predetermined change that is externally observable. The change part 12 may be an LED (Light Emitting Diode) that emits light of a predetermined color, for example, a blue LED, and the predetermined change may be light emission of a predetermined color, for example, blue. The predetermined color is not limited to blue and may be any color. The predetermined change may be a change in the color of light emission or a change in the intensity of light emission according to the strength (pressure) of inhalation, which is sensed by the sensor 11. The change part 12 is not limited to an LED and may be a light source having another configuration that emits light of a predetermined color.

FIG. 2B is a diagram illustrating an example schematic appearance of the flavor inhaler according to the embodiment of the present invention. The arrangement of the change part 12 will be described with reference to FIG. 2B. As presented in FIG. 2B, the flavor inhaler 1 may be, but not limited to, of a stick shape including two ends 161 and 162. The user holds the one end 161 in the mouth to inhale. The user may hold the one end 161 in the mouth to inhale through a mouthpiece for a cigarette or the like attachable to the one end 161. In a case where the flavor inhaler 1 has the shape as presented in FIG. 2B, the change part 12 is preferably disposed in the other end 162 of the two ends. The change part 12 is at least a portion of an outer surface of the flavor inhaler 1 and may have any shape such as a substantially rectangular shape as presented in FIG. 2B or an annular shape (not illustrated) along the outer circumference of the flavor inhaler 1.

Referring back to FIG. 2A, a control unit 13 is a block that causes the change part 12 to generate a predetermined change on the basis of at least a signal from the sensor 11. The control unit 13 may cause the change part 12 to produce light emission of a predetermined color when, for example, the magnitude of the signal from the sensor 11 or the strength of inhalation determined based on the signal is greater than or equal to a predetermined threshold value. Further, the control unit 13 may change the color or intensity of light emission of the change part 12 in accordance with, for example, the magnitude of the signal from the sensor 11 or the strength of inhalation determined based on the signal. For example, the control unit 13 may increase the intensity of light emission when inhalation is strong, and decrease the intensity of light emission when inhalation is weak. Alternatively, for example, the control unit 13 may divide the strength of inhalation into a plurality of levels, set a predetermined color for each of the plurality of levels, and cause emission of light of the predetermined color corresponding to the strength of inhalation. The control unit 13 may be an electronic circuit module configured as a microprocessor or a microcomputer.

A communication unit 14 performs wireless communication with an external device including the user terminal 2 illustrated in FIG. 1 or another computer. For example, when executing short-range wireless communication such as Bluetooth or BLE communication with the external device, the communication unit 14 executes an authentication connection (corresponding to, for example, a pairing process for Bluetooth) that is a process of configuring a communication connection between the flavor inhaler 1 and the external device. The authentication connection is, for example, a process necessary to start communication between the flavor inhaler 1 and the external device. Appropriate authentication connection enables encrypted communication to be executed between the flavor inhaler 1 and the external device. The communication unit 11 may receive a request for an authentication connection from the external device or may transmit a request for an authentication connection to the external device. The communication unit 14 may be implemented using at least a network interface serving as a hardware resource. The control unit 13 is capable of transmitting various kinds of information detected by the sensor 11 to the user terminal 2 or another computer through the communication unit 14. The various kinds of information to be transmitted from the control unit 13 to the user terminal 2 or another computer through the communication unit 14 include, for example, output information for allowing the user terminal 2 to output the state of the flavor inhaler 1. Further, the communication unit 14 is capable of receiving various kinds of information transmitted from the user terminal 2 or another computer.

The flavor inhaler 1 according to an embodiment of the present invention includes a conventional tobacco product. The conventional tobacco product does not include the sensor 11, the control unit 13, or the communication unit 14, but a burning portion thereof corresponds to the change part 12. This is because a predetermined change in color or temperature is generated in the burning portion of the conventional tobacco product in response to a puff action of the user.

In a case where the flavor inhaler 1 is a conventional tobacco product (for example, a cigarette), a mouthpiece (for example, a mouthpiece for a cigarette) attached to one end of the tobacco product may include all or some of the functions of the sensor 11, the control unit 13, and the communication unit 14 in FIG. 2A. In this configuration, the mouthpiece is capable of transmitting various kinds of information such as inhalation information detected by the sensor 11 to the user terminal 2 or another computer.

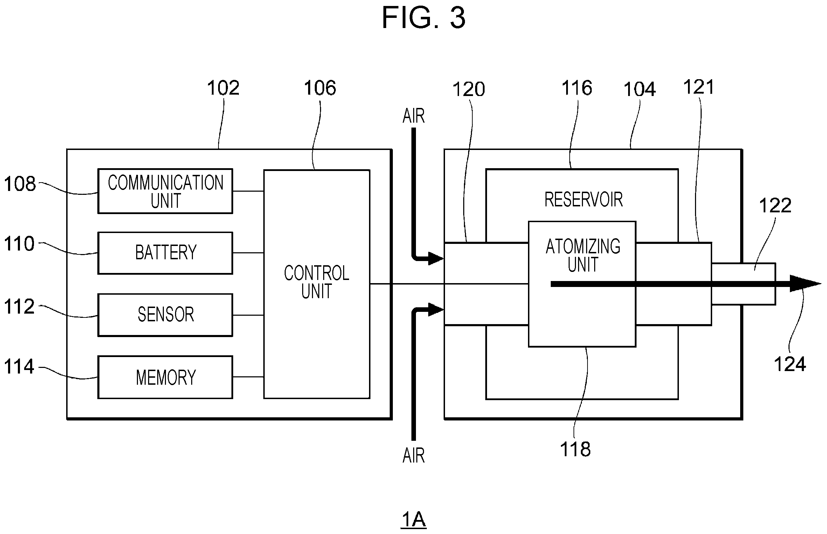

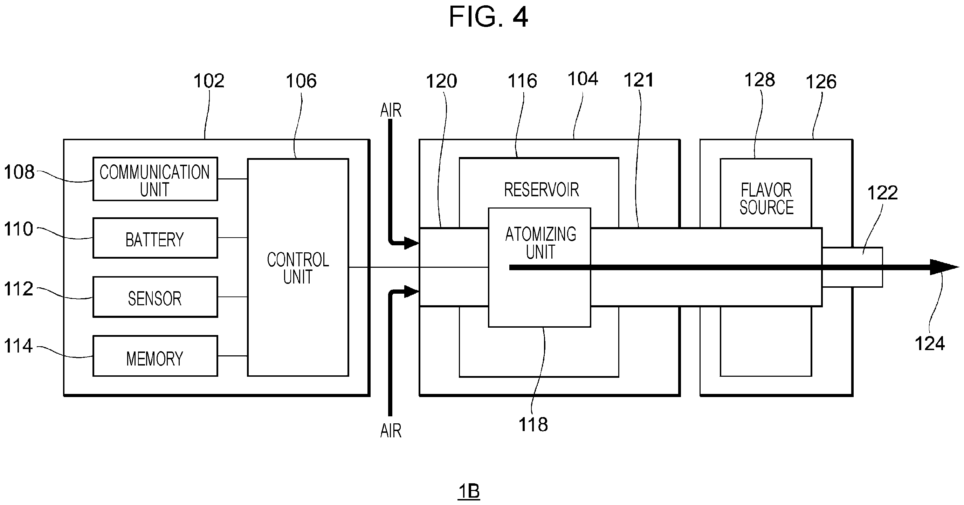

FIG. 3 is a block diagram illustrating a schematic configuration of the flavor inhaler according to the embodiment of the present invention. As illustrated in FIG. 3, a flavor inhaler 1A includes a first member 102 (battery unit) and a second member 104 (cartridge). As illustrated in the diagram, in one example, the first member 102 may include a control unit 106, a communication unit 108, a battery 110, a sensor 112, and a memory 114. The control unit 13 in FIG. 2A corresponds to the control unit 106 in FIG. 3, the sensor 11 in FIG. 2A corresponds to the sensor 112 in FIG. 3, and the communication unit 14 in FIG. 2A corresponds to the communication unit 108 in FIG. 3. In FIG. 3 and FIG. 4, the first member 102 (battery unit) is described as, but not limited to, an element included in the flavor inhaler 1A. For example, an element included in the first member 102, that is, at least one of the control unit 106, the communication unit 108, the battery 110, the sensor 112, or the memory 114, may be an element external to the flavor inhaler 1A.

In one example, the second member 104 may include a reservoir 116, an atomizing unit 118, an air intake flow path 120, an aerosol flow path 121, and an inhalation port part 122. Some of the components included in the first member 102 may be included in the second member 104. Some of the components included in the second member 104 may be included in the first member 102. The second member 104 may be configured to be removably attached to the first member 102. Alternatively, all of the components included in the first member 102 and the second member 104 may be included in the same housing instead of the first member 102 and the second member 104.

The reservoir 116 holds an aerosol source. For example, the reservoir 116 is composed of a fibrous or porous raw material and holds an aerosol source as a liquid in gaps between fibers or in pores of the porous material. As the fibrous or porous raw material described above, for example, cotton, glass fiber, or a tobacco raw material can be used. The reservoir 116 may be configured as a tank accommodating a liquid. The aerosol source is a liquid such as a polyhydric alcohol, for example, glycerine or propylene glycol, or water. In a case where the flavor inhaler 1A is a medical inhaler such as a nebulizer, the aerosol source may also include a medicine to be inhaled by a patient. In another example, the aerosol source may include a tobacco raw material or an extract derived from a tobacco raw material that releases an inhaling flavor component when heated. The reservoir 116 may have a configuration in which the aerosol source can be replenished as it is consumed. Alternatively, the reservoir 116 may be configured such that the reservoir 116 itself can be replaced when the aerosol source is consumed. The aerosol source is not limited to a liquid and may be a solid. In a case where the aerosol source is a solid, for example, the reservoir 116 may be a hollow container that is not made of a fibrous or porous raw material.

The atomizing unit 118 is configured to atomize the aerosol source to generate an aerosol. When the sensor 112 detects an inhalation action, the atomizing unit 118 generates an aerosol. For example, a wick (not illustrated) may be disposed so as to couple the reservoir 116 and the atomizing unit 118 to each other. In this case, a portion of the wick communicates with the inside of the reservoir 116 and is in contact with the aerosol source. Another portion of the wick extends to the atomizing unit 118. The aerosol source is transferred from the reservoir 116 to the atomizing unit 118 by capillary action of the wick. In one example, the atomizing unit 118 includes a heater electrically connected to the battery 110. The heater is disposed in contact with or in close proximity to the wick. When an inhalation action is detected, the control unit 106 controls the heater of the atomizing unit 118 to heat the aerosol source transferred through the wick to atomize the aerosol source. In another example, the atomizing unit 118 may be an ultrasonic atomizer that atomizes the aerosol source by ultrasonic vibration. The atomizing unit 118 is connected to the air intake flow path 120, and the air intake flow path 120 communicates with the outside of the flavor inhaler 1A. The aerosol generated in the atomizing unit 118 is mixed with air taken in through the air intake flow path 120. A fluid mixture of the aerosol and the air is delivered to the aerosol flow path 121, as indicated by an arrow 124. The aerosol flow path 121 has a tubular structure for conveying the fluid mixture of the air and the aerosol generated in the atomizing unit 118 to the inhalation port part 122.

The inhalation port part 122 is located at a terminal end of the aerosol flow path 121 and is configured to open the aerosol flow path 121 to the outside of the flavor inhaler 1A. The user holds the inhalation port part 122 in the mouth and inhales to take air containing the aerosol into the oral cavity.

The communication unit 108 communicates with the user terminal or another computer. The communication unit 108 may be implemented using at least a network interface serving as a hardware resource.

The battery 110 supplies electric power to the components of the flavor inhaler 1A, such as the communication unit 108, the sensor 112, the memory 114, and the atomizing unit 118. The battery 110 may be chargeable when connected to an external power supply via a predetermined port (not illustrated) of the flavor inhaler 1A. Only the battery 110 may be removable from the first member 102 or the flavor inhaler 1A and may be replaceable with a new battery 110. Alternatively, the battery 110 may be replaceable with a new battery 110 by replacing the entire first member 102 with a new first member 102.

The sensor 112 may include a pressure sensor that detects pressure fluctuations or a flow sensor that detects a flow rate in the air intake flow path 120 and/or the aerosol flow path 121. The sensor 112 may also include a weight sensor that detects the weight of a component such as the reservoir 116. The sensor 112 may also be configured to detect a puff action performed by the user using the flavor inhaler 1A. The sensor 112 may also be configured to add up the amount of time during which the atomizing unit 118 is energized. The sensor 112 may also be configured to detect the height of the liquid level in the reservoir 116. The sensor 112 may also be configured to detect the SOC (State of Charge), the integrated current value, the voltage, and the like of the battery 110. The integrated current value may be determined by a current integration method, an SOC-OCV (Open Circuit Voltage) method, or the like. The sensor 112 may also be an operation button or the like operable by the user.

The control unit 106 may be an electronic circuit module configured as a microprocessor or a microcomputer. The control unit 106 may be configured to control the operation of the flavor inhaler 1A in accordance with a computer-executable command stored in the memory 114. The memory 114 is a storage medium such as a ROM, a RAM, or a flash memory. The memory 114 may store the computer-executable command described above, setting information necessary for controlling the flavor inhaler 1A, and the like. The memory 114 stores, for example, action information regarding a predetermined action on the flavor inhaler 1A.

The predetermined action on the flavor inhaler 1A includes, for example, the following actions (1) to (5):
(1) charging the battery 110 included in the flavor inhaler 1A (such as charging the battery 110 in response to the flavor inhaler 1A being connected to a charging device (not illustrated), for example);
(2) execution of a puff action on the flavor inhaler 1A (such as heating of the heater by the atomizing unit 118 to atomize the aerosol source, for example);
(3) a connection, reconnection, or the like made between the first member 102 and the second member 104 including the atomizing unit 118 that atomizes the aerosol source illustrated in FIGs. 3 and 4 (such as an electrical or mechanical (including physical) connection made between the first member 102 and the second member 104, or execution of an authentication process in a case where an authentication process is executed when the first member 102 and the second member 104 are connected to each other);
(4) reaching a state in which the remaining amount of the battery 110 is large (for example, the remaining amount of the battery becomes greater than or equal to a predetermined value (for example, 70%); and
(5) detection of the use of the flavor inhaler 1A by the user (such as detection of vibration of the flavor inhaler 1A by the sensor 112, for example).

In the case of (4), for example, the control unit 106 measures the remaining amount of the battery 110 that supplies electric power to the flavor inhaler 1A illustrated in FIGs. 3 and 4. The control unit 106 measures the remaining amount of the battery on the basis of information on the battery 110, such as the SOC, the integrated current value, or the voltage, detected by, for example, the sensor 112 illustrated in FIG. 3 and FIG. 4. The remaining amount of the battery may be indicated by a percentage (%) of how much of the entire amount remains or by the capacity of the battery (for example, mhA), or may be displayed using another method.

For example, in the case of (5), for example, the memory 114 may store various types of information such as control methods for the communication unit 108 (such as modes of light emission, audio emission, vibration, etc.), values detected by the sensor 112, and a heating history of the heater by the atomizing unit 118. The control unit 106 reads information from the memory 114 as necessary, uses the information to control the flavor inhaler 1A, and stores the information in the memory 114 as necessary.

FIG. 4 is a block diagram illustrating another schematic configuration of the flavor inhaler according to the embodiment of the present invention. As illustrated in the diagram, a flavor inhaler 1B includes a third member 126 in addition to the elements included in the flavor inhaler 1A in FIG. 4. The third member 126 may include a flavor source 128. In one example, in a case where the flavor inhaler 1B is an electronic cigarette, the flavor source 128 may include an inhaling flavor component of tobacco. As illustrated in the diagram, the aerosol flow path 121 extends across the second member 104 and the third member 126. The inhalation port part 122 is included in the third member 126.

The flavor source 128 is a component for imparting a flavor to the aerosol. The flavor source 128 is disposed in the middle of the aerosol flow path 121. The fluid mixture of the air and the aerosol generated by the atomizing unit 118 (it should be noted that the fluid mixture may hereinafter be referred to simply as the aerosol) flows to the inhalation port part 122 through the aerosol flow path 121. In this manner, the flavor source 128 is disposed downstream of the atomizing unit 118 with respect to the flow of the aerosol. In other words, the flavor source 128 is located closer to the inhalation port part 122 in the aerosol flow path 121 than the atomizing unit 118. Accordingly, the aerosol generated by the atomizing unit 118 passes through the flavor source 128 before reaching the inhalation port part 122. As the aerosol passes through the flavor source 128, the inhaling flavor component contained in the flavor source 128 is imparted to the aerosol. In one example, in a case where the flavor inhaler 1B is a heat-not-burn tobacco product, the flavor source 128 may be one derived from tobacco, such as a shredded tobacco or a processed product obtained by forming a tobacco raw material into a granular, sheet, or powder shape. Alternatively, the flavor source 128 may be one not derived from tobacco, which is made from a non-tobacco plant (for example, mint or a herb). In one example, the flavor source 128 includes a tobacco component. The flavor source 128 may contain a flavor component such as menthol. In addition to the flavor source 128, the reservoir 116 may also have a substance containing an inhaling flavor component. For example, the flavor inhaler 1B may be configured such that the flavor source 128 holds a flavor substance derived from tobacco and the reservoir 116 includes a flavor substance not derived from tobacco.

The user holds the inhalation port part 122 in the mouth and inhales. As a result, the user can take air containing the aerosol to which the flavor has been imparted into the oral cavity.

The control unit 106 is configured to control the flavor inhalers 1A and 1B (hereinafter may be collectively referred to as the "flavor inhaler 1") according to the embodiment of the present disclosure in various ways.

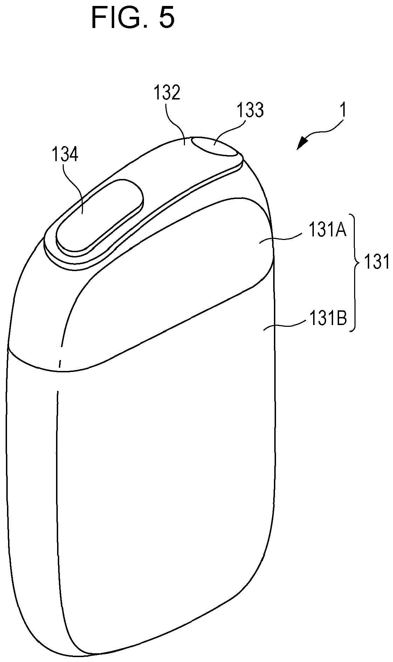

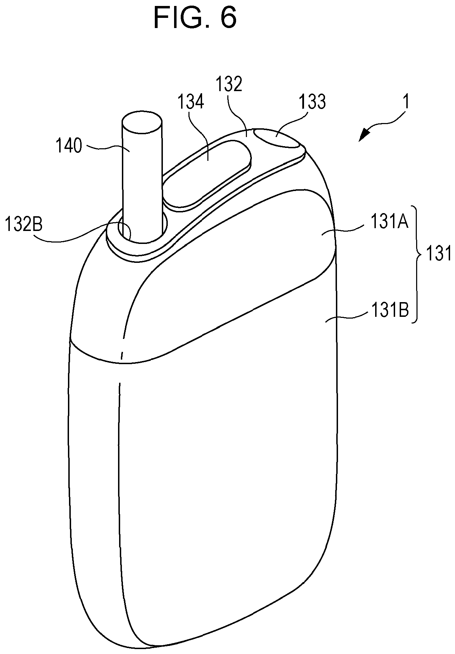

FIG. 5 is a diagram illustrating another example schematic appearance of the flavor inhaler according to the embodiment of the present invention. FIG. 6 illustrates another example schematic appearance of the flavor inhaler according to the embodiment of the present invention with an aerosol generating substrate held. In this embodiment, for example, the flavor inhaler 1 is configured to heat an aerosol generating substrate such as an inhalation article having a flavor producing material such as a filler that contains an aerosol source and a flavor source to generate an aerosol including a flavor. An inhalation article 140 may be used as the aerosol generating substrate.

As will be understood by a person skilled in the art, the inhalation article 140 is merely an example of the aerosol generating substrate. The aerosol source contained in the aerosol generating substrate may be a solid or a liquid. The aerosol source may be a liquid such as a polyhydric alcohol, for example, glycerine or propylene glycol, or water, and a mixture thereof. The aerosol source may include a tobacco raw material or an extract derived from a tobacco raw material that releases an inhaling flavor component when heated. In a case where the flavor inhaler 1 is a medical inhaler such as a nebulizer, the aerosol source may include a medicine to be inhaled by a patient. The aerosol generating substrate may include no flavor source in some applications.

As illustrated in FIG. 5 and FIG. 6, the flavor inhaler 1 has a top housing 131A, a bottom housing 131B, a cover 132, a switch 133, and a lid part 134. The top housing 131A and the bottom housing 131B are connected to each other to form an outermost housing 131 of the flavor inhaler 1. The housing 131 may be sized to fit in a user's hand. In this case, when the user uses the flavor inhaler 1, the user can hold the flavor inhaler 1 with their hand and inhale the aerosol.

The top housing 131A has an opening (not illustrated), and the cover 132 is coupled to the top housing 131A such that the opening is closed. As illustrated in FIG. 6, the cover 132 has an opening 132B into which the inhalation article 140 can be inserted. The lid part 134 is configured to open and close the opening 132B in the cover 132. Specifically, the lid part 134 is attached to the cover 132 and is configured to be movable along the front surface of the cover 132 between a first position at which the opening 132B is closed and a second position at which the opening 132B is opened.

The switch 133 is used to switch on and off the operation of the flavor inhaler 1. For example, as illustrated in FIG. 6, the user operates the switch 133 with the inhalation article 140 inserted into the opening 132B to supply electric power from the battery (not illustrated) to a heater unit (not illustrated). As a result, the inhalation article 140 can be heated without being burned. When the inhalation article 140 is heated, an aerosol is produced from the aerosol source included in the inhalation article 140, and the flavor of the flavor source is incorporated into the aerosol. The user inhales a portion of the inhalation article 140 (a portion illustrated in FIG. 6) protruding from the flavor inhaler 1, thereby being able to inhale the aerosol containing the flavor. In this specification, a direction in which an aerosol generating substrate such as the inhalation article 140 is inserted into the opening 132B is referred to as a longitudinal direction of the flavor inhaler 1.

The configuration of the flavor inhaler 1 illustrated in FIG. 5 and FIG. 6 is merely an example of the configuration of a flavor inhaler according to the present disclosure. The flavor inhaler according to the present disclosure can be configured in various forms such that an aerosol can be generated by heating an aerosol generating substrate including an aerosol source and the user can inhale the generated aerosol source.

### [Configuration of User Terminal]

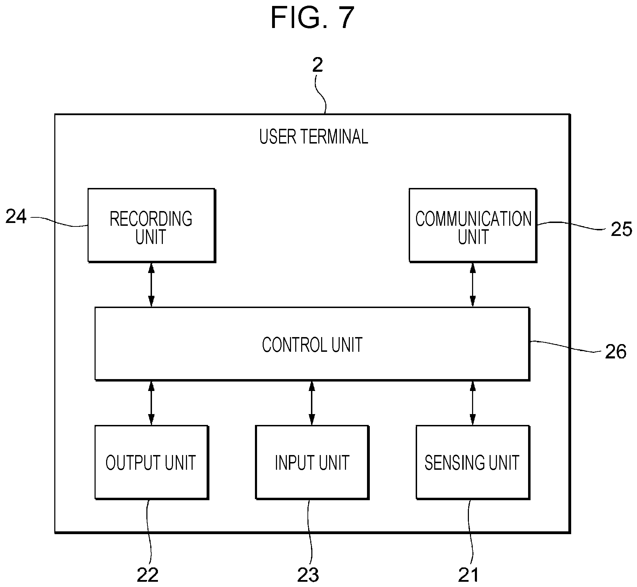

FIG. 7 is a block diagram of a schematic configuration of a user terminal according to the embodiment of the present invention. It should be noted that FIG. 7 schematically and conceptually illustrates components included in the user terminal 2 and does not illustrate the precise arrangement, shape, size, positional relationship, and the like of the components and the user terminal 2. It should also be noted that the user terminal 2 may include a component not illustrated. A non-limiting example of the user terminal 2 is a computer such as a smartphone, a tablet, or a personal computer. For example, a sensing unit 21 described below may be implemented by a digital camera externally connected to the computer.

The sensing unit 21 detects an externally observable predetermined change generated in at least a portion of the flavor inhaler 1, for example, in the change part 12. The sensing unit 21 may be implemented using at least a digital camera, a temperature sensor, or the like serving as a hardware resource.

An output unit 22 executes a message output process on the basis of output information notified from the flavor inhaler 1 illustrated in FIG. 1. The output unit 22 may execute an audio output process on the basis of output information notified from the flavor inhaler 1. The output unit 22 displays information indicating that the predetermined change described above has been detected. The output unit 22 may be implemented using at least a display (including a touch panel display, for example) or the like serving as a hardware resource.

An input unit 23 receives an input from the user. The input unit 23 may be implemented using at least a keyboard, a mouse, a touch panel display, or the like serving as a hardware resource.

A recording unit 24 stores programs, information, and the like. The recording unit 24 may be implemented using at least an HDD (Hard Disk Drive), an SSD (Solid State Drive), a memory, or the like serving as a hardware resource.

A communication unit 25 communicates with another computer. The communication unit 25 may be implemented using at least a network interface serving as a hardware resource.

A control unit 26 performs various controls. The control unit 26 may be configured to transmit and receive information through the communication unit 25. The output unit 22 can output information based on the received output information. For example, the control unit 26 may be configured to make a determination related to the way in which the user inhales. The output unit 22 can further display a result of the determination. Further, the control unit 26 may be configured to enable the user to select one of a plurality of ways of inhaling via the input unit 23. The output unit 22 can further display information based on the selected way of inhaling. The control unit 26 may be implemented using at least a processor or the like serving as a hardware resource.

Various functions of the user terminal 2 may be implemented by using an application operating on the user terminal 2. The user terminal 2 may download an application and implement various functions by using the downloaded application. Alternatively, the user terminal 2 may download a program for implementing various functions of the user terminal 2 and execute the downloaded program to implement various functions. The user terminal 2 may implement these functions by using PWA (Progressive Web Apps).

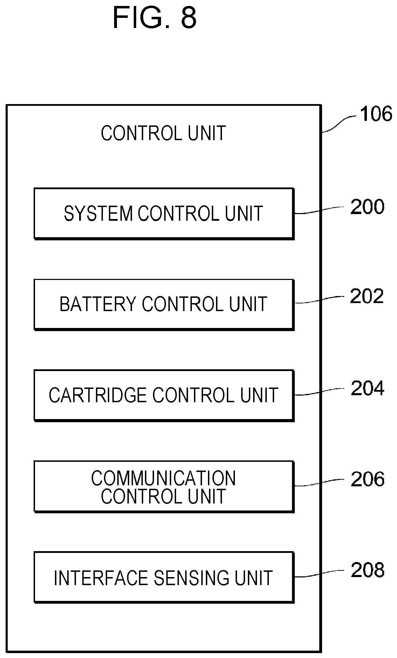

FIG. 8 is a schematic configuration diagram illustrating an example functional configuration of a control unit according to the embodiment of the present invention. As illustrated in FIG. 8, the control unit 106 functionally includes a system control unit 200, a battery control unit 202, a cartridge control unit 204, a communication control unit 206, and an interface sensing unit 208.

The control unit 106 can be implemented by, for example, a CPU or the like executing a program stored in the memory 114 illustrated FIGs. 3 and 4. Alternatively, the control unit 106 may be implemented by downloading a program to be used for processing of the control unit 106 and executing the downloaded program. The control unit 13 illustrated in FIG. 2A may functionally include the system control unit 200, the battery control unit 202, the cartridge control unit 204, the communication control unit 206, and the interface sensing unit 208. The functions included in the control unit 106 or the control unit 13, described above, may be included in another element. For example, at least one of the communication control unit 206 or the cartridge control unit 204 may be included in the communication unit 108 illustrated in FIGs. 3 and 4. The interface sensing unit 208 may be included in the sensor 112 illustrated in FIGs. 3 and 4, for example.

The communication between the flavor inhaler 1 and the user terminal 2 may be any communication such as short-range wireless communication and will be described hereinafter in the case of BLE (Bluetooth Low Energy) communication as an example.

The system control unit 200 controls the functions included in the control unit 106 (in the example in FIG. 8, the battery control unit 202, the cartridge control unit 204, the communication control unit 206, the interface sensing unit 208, and the cartridge control unit 204). The system control unit 200 further controls execution of various control programs, an embedded operating system (OS) program, and the like. For example, upon detection of various request signals such as an activation instruction, the system control unit 200 reads a program, an OS code, and the like and performs processing time or resource allocation or the like necessary for execution of the program, the OS code, and the like, thereby processing a process that is the unit of execution of the program. The system control unit 200 is capable of controlling various functions and various processes, without being limited to these examples, necessary for the operation of the flavor inhaler 1.

The battery control unit 202 determines the remaining amount of the battery 110 that supplies electric power to the flavor inhaler 1A illustrated in FIGs. 3 and 4. The battery control unit 202 measures the remaining amount of the battery 110. The battery control unit 202 measures the remaining amount of the battery on a regular basis or at any timing on the basis of information on the battery 110, such as the SOC, the integrated current value, or the voltage, detected by, for example, the sensor 112 illustrated in FIG. 3 and FIG. 4.

The battery control unit 202 compares the remaining amount of the battery 110 with one or more threshold values. Here, a threshold value is set for a battery, for example, and is indicated by a value of the remaining amount of the battery. For example, the threshold value may be indicated, as a value of the remaining amount of the battery, by percentage (%) such as 30%, by fraction such as 3/10, or by capacity such as 300 mAh. In the following, a case where the threshold value is indicated by percentage (%) will be described as an example.

The battery control unit 202 may determine whether the measured remaining amount of the battery 110 is less than a threshold value (for example, 30%). A plurality of threshold values may be provided, such as a first threshold value and a second threshold value smaller than the first threshold value. A plurality of threshold values may be provided such that, for example, the first threshold value is 30% and the second threshold value is 10%. Alternatively, more threshold values may be provided. For example, a threshold value larger than the first threshold value (30%) may be set, a threshold value between the first threshold value (30%) and the second threshold value (10%) may be set, and a threshold value smaller than the second threshold value may be set. The first threshold value and the second threshold value are not limited to these examples, and may be any values or can be set in any manner. In this case, the battery control unit 202 determines whether the measured remaining amount of the battery 110 is less than the first threshold value (30%). The battery control unit 202 further determines whether the measured remaining amount of the battery 110 is less than the second threshold value (10%) smaller than the first threshold value (30%). The battery control unit 202 further determines whether the measured remaining amount of the battery 110 is less than the first threshold value (30%) and is greater than or equal to the second threshold value.

In addition, for example, the battery control unit 202 may detect whether the flavor inhaler 1A is connected to a charging device to determine whether the battery 110 is being charged. The battery control unit 202 may further detect an integrated current value, a voltage value, or the like of the battery 110 to determine the remaining battery amount with reference to the detected integrated current value, voltage value, or the like of the battery.

The cartridge control unit 204 determines, for example, the connection state between the first member 102 and the second member 104 including the atomizing unit 118 that atomizes the aerosol source illustrated in FIGs. 3 and 4. For example, the cartridge control unit 204 determines whether the first member 102 and the second member 104 are electrically or mechanically (including physically) connected to each other.

An electrical connection of the first member 102 and the second member 104 includes, for example, energization of the first member 102 and the second member 104.

A mechanical (including physical) connection of the first member 102 and the second member 104 includes, for example, a connection of the first member 102 and the second member 104 by engagement between them. A mechanical (including physical) connection of the first member 102 and the second member 104 may include, for example, a connection of the first member 102 and the second member 104 by screwing. Specifically, the first member 102 has a female connector in a portion thereof adjacent to the second member 104, the female connector having a helical groove, and the second member 104 has a male connector in a portion thereof adjacent to the first member 102, the male connector having a helical projection. The female connector of the first member 102 and the male connector of the second member 104 are screwed into each other to connect the first member 102 and the second member 104 to each other. The first member 102 may have a male connector, and the second member 104 may have a female connector.

For example, in a case where an authentication process is executed when the first member 102 and the second member 104 are electrically or mechanically connected to each other, the cartridge control unit 204 determines that a connection is made between the first member 102 and the second member 104 if the authentication process is successful. On the other hand, if the authentication process has failed, the cartridge control unit 204 determines that no connection is made between the first member 102 and the second member 104. The details of the authentication process will be described below.

The cartridge control unit 204 determines whether a predetermined period (for example, 10 seconds, 1 minute, 5 minutes, or the like) has elapsed since the connection between the first member 102 and the second member 104 was released. The cartridge control unit 204 counts the elapsed time after the release of the connection between the first member 102 and the second member 104 is sensed. The memory 114 illustrated in FIGs. 3 and 4 stores information regarding the predetermined time. For example, the cartridge control unit 204 refers to the information regarding the predetermined time stored in the memory 114 and compares the counted elapsed time with the predetermined time.

The cartridge control unit 204 executes an authentication process on the second member 104 (cartridge). For example, the cartridge control unit 204 checks the appropriateness of the second member 104 as a connection target to which the first member 102 is connected. For example, the cartridge control unit 204 refers to identification information of each of one or a plurality of second members 104 connectable to the first member 102, which is recorded in advance in the memory 114 illustrated in FIGs. 3 and 4, to determine whether a specific second member 104 is appropriate as a connection target.

The cartridge control unit 204 may determine, based on the expiration date of the aerosol source included in the reservoir 116 of the second member 104 to which the first member 102 is to be connected, whether the second member 104 is appropriate as a connection target. For example, in a case where the first member 102 and the second member 104 are to be electrically or mechanically connected to each other, the cartridge control unit 204 acquires information regarding the expiration date of the aerosol source from the second member 104. The cartridge control unit 204 refers to the acquired information regarding the expiration date and, if the expiration date of the aerosol source included in the reservoir 116 of the second member 104 to which the first member 102 is to be connected has not expired, determines that the second member 104 is appropriate as a connection target. If the expiration date of the aerosol source included in the reservoir 116 of the second member 104 to which the first member 102 is to be connected has expired, the cartridge control unit 204 determines that the second member 104 is not appropriate as a connection target. Alternatively, the cartridge control unit 204 may acquire remaining-amount information regarding the remaining amount of the aerosol source included in the reservoir 116 of the second member 104 and determine the appropriateness of the second member 104 as a connection target on the basis of the acquired remaining-amount information.

Bluetooth communication is executed in units of piconets, for example. In Bluetooth communication, for example, the user terminal 2 is referred to as a "master", and the flavor inhaler 1 is referred to as a "slave". One master can be connected to seven slaves, for example. For example, the master takes the initiative of communication, and information transmission from the master to a slave is executed at any timing. On the other hand, information transmission from a slave to the master is executed in accordance with an instruction from the master (a request for an authentication connection). In communication between the flavor inhaler 1 and the user terminal 2, the user terminal 2 does not necessarily have to take the initiative of the communication. For example, the flavor inhaler 1 may take the initiative of the communication, and information may be transmitted from the flavor inhaler 1 to the user terminal 2 at any timing.

To establish encrypted communication between a master and one or more slaves, for example, the master and the slaves exchange shared secret information (link key) generated by a random number. Then, communication between the master and each slave is encrypted based on the link key. The key exchange and the procedure for establishing the communication connection setting between the master and the slave are referred to as "authentication connection".

Further, the communication control unit 206 determines success or failure of the authentication connection. For example, if the authentication connection is completed within a predetermined period (for example, several minutes) after the authentication connection is started, the communication control unit 206 may determine that the authentication connection is successful. If the authentication connection is not completed within a predetermined period (for example, several minutes) after the authentication connection is started, the communication control unit 206 may determine that the authentication connection has failed. The predetermined period for determining that the authentication connection is successful may be set to be different from the predetermined period for determining that the authentication connection has failed.

Within a period set for the authentication connection, if the authentication connection is not completed, the authentication connection may be repeatedly performed a plurality of times until the authentication is completed. When the authentication connection is to be performed again, processing related to the authentication connection may be redone from the beginning. Within the period set for the authentication connection, furthermore, even when such processing is interrupted during the authentication connection, the authentication connection may be performed again without finishing the authentication connection.

In a case where the authentication connection is forcibly stopped by the user after the authentication connection is started, the communication control unit 206 may determine that the authentication connection has failed. The case where the authentication connection is forcibly stopped by the user includes a case where the power supply of the flavor inhaler 1 or the user terminal 2 is forcibly turned off, or a case where the flavor inhaler 1 and the user terminal 2 are separated a predetermined communicable distance (for example, about 20 m in Bluetooth communication) or more from each other by the user.

When the authentication connection of the flavor inhaler 1 is completed (successful), the communication unit 108 illustrated in FIGs. 3 and 4 may notify the user terminal 2 of result information indicating that the authentication connection is completed. When the authentication connection of the flavor inhaler 1 has failed, the communication unit 108 may notify the user terminal 2 of result information indicating that the authentication connection has failed. The user terminal 2 outputs the result information to the display unit 22 illustrated in FIG. 7 as text information, but is not limited to this form. For example, the display unit 22 of the user terminal 2 may output the result information to the user by audio information, video information, image information, or the like, instead of the text information or together with the text information. The means or method by which the user terminal 2 outputs the result information is not limited to these examples, and any means or method that enables the user to easily recognize the result information may be used to output the result information.

The interface sensing unit 208 senses a predetermined action on the flavor inhaler 1, for example, at least one of the actions (1) to (5) described above. For example, the interface sensing unit 208 detects whether the flavor inhaler 1A is electrically or mechanically connected to a charging device to determine whether the battery 110 has started to be charged. The interface sensing unit 208 determines whether a puff action has been executed on the flavor inhaler 1A on the basis of, for example, the heating state of the heater included in the atomizing unit 118 illustrated in FIGs. 3 and 4.

The interface sensing unit 208 senses, as a predetermined action, an electrical or mechanical (including physical) connection made between the first member 102 and the second member 104 including the atomizing unit 118 that atomizes the aerosol source illustrated in FIGs. 3 and 4. In a case where an authentication process is executed when the first member 102 and the second member 104 are electrically or mechanically connected to each other, the interface sensing unit 208 senses execution of the authentication process as a predetermined action.

### [Authentication Connection]

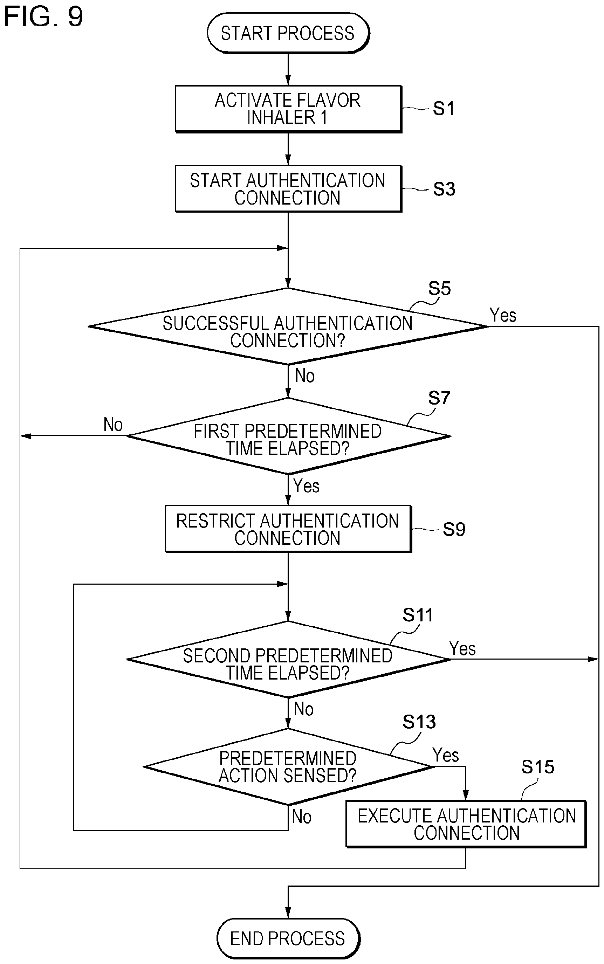

An example of an authentication connection according to the embodiment of the present invention will be described with reference to FIG. 9. FIG. 9 is a flowchart illustrating an example of the authentication connection according to the embodiment of the present invention.

As illustrated in FIG. 9, in step S1, for example, the flavor inhaler 1 is activated. Although not illustrated in FIG. 9, for example, a user presses a power button (not illustrated) on the outer surface of the flavor inhaler 1 to activate the flavor inhaler 1. The process for activating the flavor inhaler 1 is not limited to pressing of the power button and may be, for example, a puff action or the like on the flavor inhaler 1. Any method for activating the flavor inhaler 1 may be used. The process for activating the flavor inhaler 1 is similarly executed in communication control processes according to embodiments described below.

In step S3, the flavor inhaler 1 starts an authentication connection to execute communication with the user terminal 2. Although not illustrated in FIG. 9, for example, the flavor inhaler 1 may transmit a request for starting an authentication connection to the user terminal 2.

In step S5, the flavor inhaler 1 determines whether the authentication connection is successful. If the authentication connection is successful (Yes in step S5), the flavor inhaler 1 ends the process. On the other hand, if the authentication connection is not successful (No in step S5), the flavor inhaler 1 proceeds to step S7.

In step S7, the flavor inhaler 1 determines whether a first predetermined time has elapsed. If the first predetermined time has elapsed (Yes in step S7), the flavor inhaler 1 proceeds to step S9. On the other hand, if the first predetermined time has not elapsed (No in step S7), the flavor inhaler 1 returns to step S5. The first predetermined time may have any length such as several seconds or several minutes, and can be set in advance or can be set in any manner.

In step S9, the flavor inhaler 1 restricts the authentication connection with the user terminal 2. Although not illustrated in FIG. 9, for example, the flavor inhaler 1 places an authentication connection with the user terminal 2 on standby. Alternatively, for example, the flavor inhaler 1 may stop the authentication connection with the user terminal 2.

In step S11, the flavor inhaler 1 determines whether a second predetermined time has elapsed. If the second predetermined time has elapsed (Yes in step S11), the flavor inhaler 1 ends the process. On the other hand, if the second predetermined time has not elapsed (No in step S11), the flavor inhaler 1 proceeds to step S13.

In step S13, the flavor inhaler 1 determines whether a predetermined action has been sensed. For example, the flavor inhaler 1 senses a predetermined action on the flavor inhaler 1, for example, at least one of the actions (1) to (5) described above. If a predetermined action on the flavor inhaler 1 is sensed (Yes in step S13), the flavor inhaler 1 proceeds to step S115. On the other hand, if no predetermined action is sensed (No in step S13), the flavor inhaler 1 returns to step S11.

In step S15, the flavor inhaler 1 executes the authentication connection and then returns to step S5. Although not illustrated in FIG. 9, for example, when the authentication connection is stopped, the flavor inhaler 1 re-executes the authentication connection to execute wireless communication with the user terminal 2. More specifically, for example, the flavor inhaler 1 transmits a request for starting an authentication connection to the user terminal 2. Although not illustrated in FIG. 9, for example, when the authentication connection is placed on standby, the flavor inhaler 1 may execute the authentication connection.

As described above, according to the embodiment of the present invention, after the authentication connection is restricted, the authentication connection is executed in response to sensing of a predetermined action. Therefore, it is possible to reduce the load on a user when executing an authentication connection.

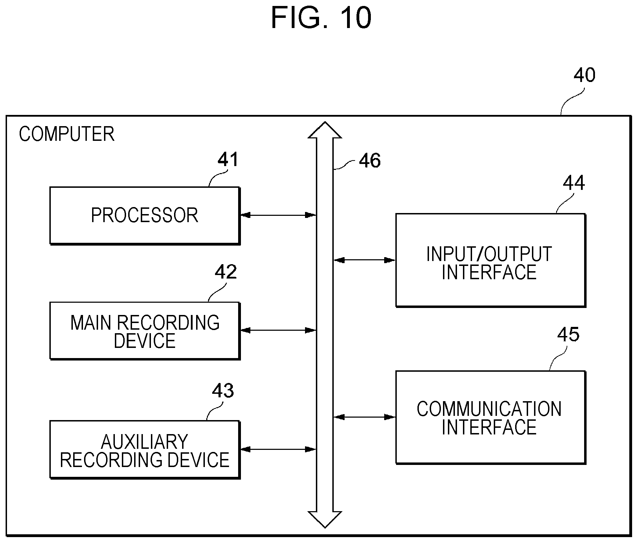

FIG. 10 is a diagram illustrating an example hardware configuration of a computer according to an embodiment of the present invention. An example hardware configuration of a computer that can be used to configure the user terminal 2 illustrated in FIG. 1 will be described with reference to FIG. 10.

As illustrated in FIG. 10, a computer 40 mainly includes, as hardware resources, a processor 41, a main recording device 42, an auxiliary recording device 43, an input/output interface 44, and a communication interface 45, and these are connected to each other via a bus line 46 including an address bus, an information bus, a control bus, and the like. An interface circuit (not illustrated) may be interposed, as necessary, between the bus line 46 and each hardware resource.

The processor 41 controls the entire computer. The main recording device 42 provides a work area for the processor 41 and is a volatile memory such as an SRAM (Static Random Access Memory) or a DRAM (Dynamic Random Access Memory). The auxiliary recording device 43 is a non-volatile memory such as an HDD, an SSD, or a flash memory that stores a program, information, and the like that are software. The program, the information, and the like are loaded from the auxiliary recording device 43 to the main recording device 42 via the bus line 46 at any point in time.

The input/output interface 44 performs one or both of presenting information and receiving input of information, and is a digital camera, a keyboard, a mouse, a display, a touch panel display, a microphone, a speaker, a temperature sensor, or the like.

It will be apparent to a person skilled in the art that the computer 40 can function as desired means, execute desired steps, and implement desired functionality through cooperation of the hardware resources exemplified above and software.

The embodiments described above are intended to facilitate understanding of the present invention and are not to be construed as limiting the present invention. The present invention may be modified/improved without departing from the gist thereof, and the present invention also includes equivalents thereof.

### Reference Signs List

- 1, 1A, 1B: flavor inhaler
- 2: user terminal
- 11: sensor
- 12: change part
- 13: control unit
- 14: communication unit
- 21: sensing unit
- 22: output unit
- 23: input unit
- 24: recording unit
- 25: communication unit
- 26: control unit
- 100: information processing system
- 102: first member
- 104: second member
- 106: control unit
- 108: communication unit
- 110: battery
- 112: sensor
- 114: memory
- 116: reservoir
- 118: atomizing unit
- 120: air intake flow path
- 121: aerosol flow path
- 122: inhalation port part
- 126: third member
- 128: flavor source
- 131: housing
- 131A: top housing
- 131B: bottom housing
- 132: cover
- 132B: opening
- 133: switch
- 134: lid part
- 140: inhalation article
- 161, 162: end
- 200: system control unit
- 202: battery control unit
- 204: cartridge control unit
- 206: communication control unit
- 208: interface sensing unit

## Claims

1. A battery unit for an aerosol generation device for generating an aerosol, the battery unit comprising:
a communication unit configured to execute an authentication connection that is a process of configuring a communication connection between the aerosol generation device and a user terminal; and
a control unit configured to sense a predetermined action on the aerosol generation device, wherein
the control unit is configured to execute the authentication connection in response to sensing of the predetermined action after the authentication connection is restricted.

2. The battery unit according to claim 1, wherein
the predetermined action includes
an inhalation action of a user to inhale the aerosol using the aerosol generation device.

3. The battery unit according to claim 1 or 2, wherein
the predetermined action includes
making a connection between the battery unit and a cartridge including an atomizing unit configured to atomize an aerosol source.

4. The battery unit according to any one of claims 1 to 3, wherein
the predetermined action includes
charging a battery included in the battery unit.

5. The battery unit according to any one of claims 1 to 4, wherein
the control unit is configured to
restrict the authentication connection when the authentication connection is not completed within a predetermined time.

6. The battery unit according to any one of claims 1 to 5, wherein
the control unit is configured to
stop the authentication connection to restrict the authentication connection.

7. The battery unit according to claim 6, wherein
the control unit is configured to
re-execute the authentication connection in response to sensing of the predetermined action after the authentication connection is stopped.

8. The battery unit according to any one of claims 1 to 7, wherein
the control unit is configured to
place the authentication connection on standby to restrict the authentication connection.

9. The battery unit according to claim 8, wherein
the control unit is configured to
execute the authentication connection in response to sensing of the predetermined action after the authentication connection is placed on standby.

10. An aerosol generation device for generating an aerosol, the aerosol generation device comprising:
a communication unit configured to execute an authentication connection that is a process of configuring a communication connection between the aerosol generation device and a user terminal; and
a control unit configured to sense a predetermined action on the aerosol generation device, wherein
the control unit is configured to
execute the authentication connection in response to sensing of the predetermined action after the authentication connection is restricted.

11. An information processing method executed by an aerosol generation device for generating an aerosol, the information processing method comprising:
a step of executing an authentication connection that is a process of configuring a communication connection between the aerosol generation device and a user terminal;
a step of sensing a predetermined action on the aerosol generation device; and
a step of executing the authentication connection in response to sensing of the predetermined action after the authentication connection is restricted.

12. A program for causing a computer to implement:
a communication function of executing an authentication connection that is a process of configuring a communication connection between an aerosol generation device and a user terminal; and
a control function of sensing a predetermined action on the aerosol generation device, wherein
the control function executes the authentication connection in response to sensing of the predetermined action after the authentication connection is restricted.
